# DEMANDE DE BREVET EUROPEEN

(11) **EP 3 988 808 A1**
(43) Date de publication de la demande: **27.04.2022**
(21) Numéro de dépôt: 21204236.0
(22) Date de dépôt: 22.10.2021
(51) Int. Cl.: F16D 25/12

(54) **DISPOSITIF DE TRANSMISSION DE COUPLE, EN PARTICULIER POUR VEHICULE AUTOMOBILE**

(30) Priorité: 23.10.2020 FR 2010903; 23.10.2020 FR 2010905
(71) Demandeur: VALEO EMBRAYAGES, 80009 Amiens (FR)
(72) Inventeur: LEBAS, Gilles, 80000 Amiens (FR); COMMEINE, Emmanuel, 80000 Amiens (FR); DOLE, Arnaud, 80000 Amiens (FR)
(74) Mandataire: Valeo Powertrain Systems

(57) **Abrégé**

L'invention concerne un dispositif de transmission de couple (1), comprenant :
- un élément d'entrée de couple (2),
- un support de rotor (5) apte à supporter radialement un rotor (13) d'une machine électrique tournante (12), le support de rotor (5) étant relié sélectivement à l'élément d'entrée (2) par un embrayage de séparation (10),
- un organe d'actionnement (40) de l'embrayage de séparation (10) comprenant un corps (41),
- un couvercle (46) faisant partie d'un carter de protection,
- un premier et un deuxième embrayage de sortie (20, 30),
- au moins une canalisation de fluide (65) pour le refroidissement et/ou la lubrification de l'embrayage de séparation (10),
ladite canalisation (65) passant successivement à l'intérieur de l'élément d'entrée de couple (2), du support de rotor (5) et du corps (41) de l'organe d'actionnement (40), l'organe d'actionnement (40) étant disposé au moins partiellement radialement à l'intérieur de l'embrayage de séparation (10).

## Description

La présente invention se rapporte au domaine des transmissions pour véhicules automobiles. Elle se rapporte notamment à un dispositif de transmission de couple destiné à être disposé dans la chaine de traction d'un véhicule automobile, entre un moteur thermique et une boîte de vitesses.

L'invention concerne plus précisément un dispositif de transmission de couple pour un véhicule automobile de type hybride dans lequel une machine électrique tournante est disposée dans la chaine de traction. L'invention concerne également le module hybride comprenant un tel dispositif de transmission de couple ainsi que la machine électrique.

Dans l'état de la technique, il est connu des ensembles de transmission, disposés entre la boîte de vitesses et le moteur thermique et comportant un embrayage de séparation côté moteur permettant d'accoupler en rotation le vilebrequin du moteur thermique au rotor de la machine électrique tournante. Ainsi, il est possible de couper le moteur thermique à chaque arrêt du véhicule et de le redémarrer grâce à la machine électrique tournante. La machine électrique tournante peut également constituer un frein électrique ou apporter un surplus d'énergie au moteur thermique pour l'assister ou éviter que celui-ci ne cale. La machine électrique tournante peut également assurer l'entraînement du véhicule. Lorsque le moteur tourne, la machine électrique tournante joue le rôle d'un alternateur. Un tel ensemble de transmission peut également lier la machine électrique tournante à la boite de vitesses par l'intermédiaire d'un double embrayage.

Un double embrayage permet de coupler alternativement l'arbre du moteur d'un véhicule, en général par l'intermédiaire d'un double volant amortisseur, avec deux arbres coaxiaux d'entrée d'une boîte de vitesses, dite boîte de vitesses robotisée.

Il est connu dans l'art antérieur d'utiliser le couvercle du carter de protection pour amener le fluide d'actionnement et le fluide de refroidissement et/ou de lubrification à l'embrayage de séparation. Un problème qui survient dans ce type d'architecture est qu'un certain nombre d'organes de roulement sont disposés à l'intérieur du couvercle, c'est-à-dire plus proches de l'axe de rotation que ne l'est le couvercle, ces derniers reçoivent donc le fluide de lubrification et/ou refroidissement à contrario de l'effort de centrifugation. Il ressort que la lubrification et/ou refroidissement de ces organes de roulement ne pouvait être faite que lorsque l'arbre d'entrée ne toumait pas.

L'invention vise à proposer une solution permettant de distribuer le fluide de lubrification et/ou refroidissement de manière plus efficace en s'aidant de l'effort de centrifugation dans un espace axial réduit.

A cet effet, l'invention a pour objet un dispositif de transmission de couple, notamment pour véhicule automobile, comprenant :
- un élément d'entrée de couple en rotation autour d'un axe X, apte à être couplé en rotation à un vilebrequin d'un moteurthermique,
- un support de rotor apte à supporter radialement un rotor d'une machine électrique tournante, le support de rotor étant relié sélectivement à l'élément d'entrée par un embrayage de séparation,
- un organe d'actionnement de l'embrayage de séparation comprenant un corps, un piston se déplaçant dans le corps selon un axe Y parallèle à l'axe de rotation Xet une butée rotative d'actionnement,
- un couvercle faisant partie d'un carter de protection, l'organe d'actionnement et le couvercle étant deux pièces distinctes,
- un premier et un deuxième embrayage de sortie conçus pour coupler en rotation respectivement un premier et deuxième élément de sortie de couple à un premier et deuxième arbre d'entrée d'une boîte de vitesses,
- au moins une canalisation de fluide pour le refroidissement et/ou la lubrification de l'embrayage de séparation,
ladite canalisation passant successivement à l'intérieur de l'élément d'entrée de couple, du support de rotor et du corps de l'organe d'actionnement, l'organe d'actionnement étant disposé au moins partiellement radialement à l'intérieur de l'embrayage de séparation.

Cette configuration permet ainsi d'amener le fluide de lubrification et/ou refroidissement en direction de l'embrayage de séparation par le centre du dispositif de transmission. Il devient donc possible d'utiliser la centrifugation pour distribuer ce fluide à tous les organes de roulement disposés à radialementau-dessus de l'élément d'entrée de couple.

Selon l'invention, il est également suggéré que l'organe d'actionnement de l'embrayage de séparation soit disposé au moins partiellement radialement à l'intérieur de l'embrayage de séparation. Il en résulte une conception particulièrement compacte de l'embrayage de séparation, en particulier lorsqu'il y a peu d'espace axial disponible entre le coté moteur thermique et le double embrayage.

Dans la description et les revendications, on utilisera les termes « avant » AV ou « arrière » AR selon la direction par rapport à une orientation axiale déterminée par l'axe X principal de rotation de la transmission du véhicule automobile « l'avant » désignant la partie située à gauche des figures, du côté du moteur, et « l'arrière » désignant la partie droite des figures, du côté de la transmission; les termes "externe" et "interne" ainsi que les orientations "axiale" et "radiale" pour désigner, selon les définitions données dans la description, des éléments de l'ensemble de la transmission de couple. Par convention, l'orientation "radiale" est dirigée orthogonalement à l'orientation axiale. L'orientation axiale se rapporte, suivant le contexte, à l'axe de rotation de l'ensemble de la transmission de couple. L'orientation "circonférentielle" est dirigée orthogonalement à la direction axiale et orthogonalement à la direction radiale. Les termes "externe" et "interne" sont utilisés pour définir la position relative d'un élément par rapport à un autre, par rapport à l'axe de référence, un élément proche de l'axe est ainsi qualifié d'interne par opposition à un élément externe situé radialement en périphérie.

Avantageusement, le support de rotor comporte à son extrémité interne une extension axiale, ladite extension étant disposé plus près de l'axe de rotation X que ne l'est l'organe d'actionnement de l'embrayage de séparation. En d'autres termes, l'organe d'actionnement de l'embrayage de séparation et l'extension axiale disposée à l'extrémité interne du rotor se succèdent radialement en rapprochement de l'axe X Au sens de l'invention, la succession radiale se comprend en termes de distance radiale.

Avantageusement, le corps de l'organe d'actionnement et/ou le support de rotor et/ou l'élément d'entrée de couple sont usinés de manière à former au moins une réserve de fluide apte à concentrer le fluide dans la canalisation. Ainsi, grâce à ces réservoirs, la majorité du fluide est dirigée vers la canalisation.

Avantageusement, le dispositif de transmission de couple comprend au moins un premier organe de roulement disposé au contact du support de rotor et du corps de l'organe d'actionnement. De préférence, le dispositif comprend deuxpremiers organes de roulement du type roulement à billes et un roulement douille à aiguilles.

De préférence, au moins un premier organe de roulement est un roulement à une rangée de billes. Typiquement, le roulement à billes pourra être à gorge profonde ou à 4 points de contact afin de reprendre plus efficacement les efforts axiaux Cet organe de roulement permet d'obtenir un guidage amélioré de la machine électrique par le carter de protection et d'éviter au maximum son basculement.

Avantageusement, le premier organe de roulement comporte une bague intérieure et une bague extérieure, ladite bague intérieure étantau contact avec le support de rotoret ladite bague extérieure étant au contact avec le corps de l'organe d'actionnement.

Avantageusement, le dispositif de transmission de couple comprend au moins un second organe de roulement disposé au contact du support de rotor et de l'élément d'entrée de couple.

Avantageusement, la canalisation de fluide est agencée de manière à lubrifier et/ou refroidir les premier et/ou second organes de roulement.

Avantageusement, le corps de l'organe d'actionnement comprend au moins un perçage d'orientation axiale autorisant le passage du fluide à partir de la canalisation en direction de la butée rotative d'actionnement. De préférence, le perçage se situe dans la partie radialement externe du corps de l'organe d'actionnement de manière à ce que le fluide puisse être distribué par gravité.

Avantageusement, le dispositif de transmission de couple comprend un deuxième et troisième organe d'actionnement avec une butée tournante associée respectivement au premier et deuxième embrayage de sortie. De préférence, chaque organe d'actionnement comporte un corps, un piston et une butée rotative d'actionnement. Cette butée étant portée par le piston et coopérant avec un organe de transmission de force. Chaque organe d'actionnement peut comprendre un piston annulaire monté coulissant axialement à l'extérieur d'un tube interne, le piston et le tube formant une chambre d'actionnement. La chambre d'actionnement peut être étanche et remplie d'huile. Le piston et le tube sont fixes en rotation de sorte que la chambre d'actionnement et l'huile ne tourne pas. De préférence, le deuxième et troisième organe d'actionnement se présenter sous la forme d'un double actionneur concentrique.

Selon un aspect de l'invention, la butée tournante peut être un palier, notamment un palier à roulement. Le palier à roulement peut comporter une bague intérieure fixée au piston, une bague extérieure en appui contre l'organe de transmission de force et des corps roulants interposés entre la bague intérieure et la bague extérieure. De préférence, les corps roulants peuvent être des billes.

Avantageusement, le premier embrayage de sortie et le deuxième embrayage de sortie se succèdent radialement en rapprochementde l'axe X De manière encore plus avantageuse, le deuxième embrayage de sortie est disposé radialement à l'intérieur du premier embrayage de sortie.

Avantageusement, le dispositif comprend en outre un circuit d'alimentation en fluide des embrayages de sortie comprenant un premier chemin de circulation de fluide formé par l'intermédiaire du double actionneur concentrique, du deuxième élément de sortie de couple et un déflecteur agencé pour concentrer le fluide en direction d'un porte disque interne du deuxième embrayage de sortie. Ainsi, la circulation du fluide est particulièrement efficace en raison du déflecteur, ce qui permet d'assurer une lubrification et/ou un refroidissement performant des deux embrayages de sortie. Ce type de circuit d'alimentation en fluide permet également de s'affranchir de l'arrivée du fluide par un des arbres de boites de vitesses.

En variante, l'invention a également pour objet un dispositif de transmission de couple, notamment pour véhicule automobile, comprenant :
- un élément d'entrée de couple en rotation autour d'un axe X, apte à être couplé en rotation à un vilebrequin d'un moteurthermique,
- un support de rotor apte à supporter radialement un rotor d'une machine électrique tournante, le support de rotor étant relié sélectivement à l'élément d'entrée par un embrayage de séparation,
- un premier et un deuxième embrayage de sortie conçus pour coupler en rotation respectivement un premier et deuxième élément de sortie de couple à un premier et deuxième arbre d'entrée d'une boîte de vitesses,
- un double actionneur concentrique associé auxembrayages de sortie,
- un circuit d'alimentation en fluide des embrayages de sortie comprenant un premier chemin de circulation de fluide formé par l'intermédiaire du double actionneur concentrique et du deuxième élément de sortie de couple,
dans lequel le premier chemin de circulation est formé en outre par un déflecteur agencé pour concentrer le fluide en direction d'un porte disque interne du deuxième embrayage de sortie.

Selon un mode de réalisation, le chemin de circulation est donc formé par un arrangement particulier des pièces en opposition avec une canalisation qui sera formée par un perçage issue de matière avec la pièce dans laquelle se situe le perçage.

Selon un mode de réalisation, le déflecteur est solidaire en rotation avec le porte-disque interne du deuxième embrayage de sortie. En variante, le déflecteur est fixé sur le double actionneur concentrique.

Selon un mode de réalisation, le déflecteur comprend une partie d'élongation radiale qui est disposé radialement à l'intérieur du porte disque interne du deuxième embrayage de sortie.

Selon un mode de réalisation, le dispositif comprend en outre un deuxième chemin de circulation de fluide en partie associé au premier pour alimenter en fluide des butées tournante du double actionneur concentrique. Par « en partie associé » on entend désigner deux chemins de circulation différent qui sont conjoints sur une distance donnée.

Avantageusement, le deuxième chemin passe au travers d'un orifice disposé sur l'extrémité arrière du déflecteur ou par un espace formé entre l'extrémité arrière du déflecteur et l'extrémité avant de l'actionneur concentrique.

Selon un mode de réalisation, le dispositif comprend en outre un troisième chemin de circulation de fluide en partie associé au premier pour alimenter en fluide des paliers axiaux configurés pour supporter les efforts axiaux du dispositif, lesdits paliers étant disposés dans des épaulements de l'élément d'entrée de couple et du premier élément de sortie de couple.

Avantageusement, le dispositif de transmission de couple selon la présente invention est connecté à un moteur électrique 48V ou haute tension.

L'invention a également pour objet un module hybride comprenant un dispositif de transmission de couple tel que décrit précédemment et une machine électrique.

L'invention sera mieux comprise à la lecture de la description qui suit et à l'examen des figures qui l'accompagnent. Ces figures ne sont données qu'à titre illustratif mais nullement limitatif de l'invention.

[Fig. 1] représente une vue en coupe axiale d'un dispositif de transmission de couple selon l'invention.

[Fig. 2] représente une vue en coupe axiale d'un second dispositif de transmission de couple selon l'invention.

Les éléments identiques, similaires ou analogues conservent la même référence d'une figure à l'autre.

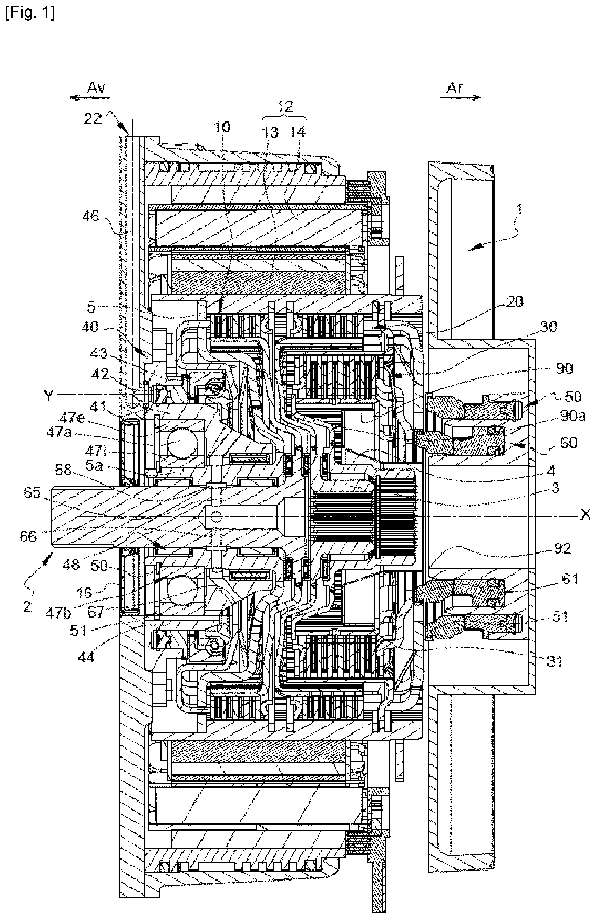

En relation avec la figure 1, on observe un dispositif de transmission de couple 1 comprenant :
- un élément d'entrée de couple 2, en rotation autour d'un axe de rotation X, apte à être couplé en rotation à un vilebrequin d'un moteur thermique (non représenté),
- un premier élément de sortie de couple 3, apte à être couplé en rotation à un premier arbre d'entrée d'une boîte de vitesses (non représentée),
- un deuxième élément de sortie de couple 4, apte à être couplé en rotation à un deuxième arbre d'entrée d'une boîte de vitesses (non représentée) et

Dans l'exemple considéré, le deuxième élément de sortie 4 est disposé en parallèle du premier élément de sortie 3 au sens de la transmission de couple. Chacun de ces éléments tourne autour d'un axe de rotation Xdu dispositif.

Un dispositif d'amortisseur de torsion (non représenté) peut être positionné entre le vilebrequin du moteur thermique et l'élément d'entrée de couple 2.

Le dispositif comprend également une machine électrique tournante 12 comprenant un rotor 13 et un stator 14. Le stator 14 est fixe et disposé autour du rotor 13. Le rotor 13 est disposé au sens de la transmission de couple entre l'élément d'entrée de couple 2 d'une part et le premier élément de sortie 3 d'autre part.

Dans l'exemple considéré, la machine électrique tournante 12 est une machine synchrone à aimants permanents.

Le rotor 13 de la machine électrique tournante est relié sélectivement à l'élément d'entrée 2 par un embrayage de séparation 10, au premier élément de sortie 3 par un premier embrayage de sortie 20, et au deuxième élément de sortie 4 par un deuxième embrayage de sortie 30.

Le dispositif 1 comprend également un support de rotor 5 apte à supporter radialement le rotor 13. Dans l'exemple considéré, le supportde rotor5 est agencé entre l'élément d'entrée de couple 2 et les premier 3 et deuxième 4 élément de sortie de couple, au sens de la transmission de couple.

Ainsi, le support 5 maintient la machine électrique tournante 12 en rotation. La machine électrique tournante 12 est alors appelée « in-line », c'est-à-dire que l'axe de rotation de la machine électrique tournante 12 est confondu avec l'axe de rotation X du dispositif 1 de transmission de couple.

Dans l'exemple considéré, l'embrayage de séparation 10 est situé radialement à l'intérieur du rotor 13. Ainsi, il existe un plan perpendiculaire à l'axe X qui passe à la fois par l'embrayage de séparation 10 et le rotor 13.

L'embrayage de séparation 10 accouple sélectivement et par friction l'élément d'entrée de couple 2 et le support de rotor 5 et comprend :
- un porte-disque d'entrée solidaire en rotation de l'élément d'entrée de couple 2,
- un porte-disque de sortie défini ici par le support de rotor 5 et
- un ensemble multidisque comprenant plusieurs disques de friction, ici quatre, solidaires en rotation du porte-disque d'entrée, plusieurs plateaux respectivement disposés de part et d'autre de chaque disque de friction, solidaires en rotation du porte-disque de sortie et des garnitures de friction disposées entre les plateaux et un disque de friction, fixées de chaque côté des disques de friction, l'embrayage 10 décrivant une position débrayée et une position embrayée dans laquelle lesdits plateaux et le disque de friction pincent les garnitures de friction de manière à transmettre un couple entre le porte-disque d'entrée et le porte-disque de sortie.

Chaque porte-disque synchronise en rotation l'ensemble des plateaux et l'ensemble des disques de friction. Chaque portes-disque comporte une jupe cylindrique sur lesquelles sont montées les plateaux et les disques de friction.

Les disques de friction de l'ensemble multidisque coopèrent avec la jupe cylindrique du porte-disque d'entrée selon leur périphérie radialement intérieure par cannelures. Les disques de friction sont donc radialement à l'extérieur de la jupe cylindrique.

Les plateaux de l'ensemble multidisque coopèrent avec la jupe cylindrique du porte-disque de sortie selon leur périphérie radialement extérieure par cannelures. Les plateaux sont donc radialement à l'intérieur de la jupe cylindrique.

Dans l'exemple considéré, le dispositif comprend également un premier embrayage de sortie 20 accouplant sélectivement et parfriction le support de rotor 5 et le premier élément de sortie 3.

Ainsi, le premier embrayage de sortie 20 comprend :
- un porte-disque d'entrée défini parle support 5,
- un porte-disque de sortie solidaire en rotation du premier élément de sortie 3 et,
- un ensemble multidisque comprenant plusieurs disques de friction, ici cinq, solidaires en rotation du porte-disque de sortie, plusieurs plateaux respectivement disposés de part et d'autre de chaque disque de friction, solidaires en rotation du porte-disque d'entrée et des garnitures de friction disposées entre les plateaux et un disque de friction, fixées de chaque côté des disques de friction, l'embrayage 20 décrivant une position débrayée et une position embrayée dans laquelle lesdits plateaux et le disque de friction pincent les garnitures de friction de manière à transmettre un couple entre le porte-disque d'entrée et le porte-disque de sortie.

Dans l'exemple considéré, le dispositif 1 comprend un deuxième embrayage de sortie 30 analogue au premier embrayage de sortie 20, accouplant sélectivement et par friction le support 5 et le premier élément de sortie 4.

De manière commune aux trois embrayages 10, 20et 30, les garnitures peuvent être fixées sur les disques de friction, notamment par collage, notamment par rivetage, notamment par surmoulage. En variante, les garnitures sont fixées sur les plateaux

Chaque porte-disque peut synchroniser en rotation l'ensemble des plateauxou l'ensemble des disques de friction.

Selon un aspect de l'invention, les plateaux peuvent être solidaires en rotation du porte-disque d'entrée et les disques de friction peuvent être solidaires du porte-disque de sortie. En variante, les plateaux peuvent être solidaires en rotation du porte-disque de sortie. Les disques peuvent être solidaires en rotation du porte-disque d'entrée.

De préférence, les embrayages 10, 20, 30 sont de type humide. Les embrayages étant contenus dans au moins une chambre étanche remplie d'un fluide, notamment de l'huile.

Au sens de la présente demande, un embrayage humide est un embrayage qui est adapté pour fonctionner dans un bain d'huile. Les embrayages 10, 20, 30 comportent avantageusement entre deuxet sept disques de friction, de préférence quatre disques de friction. De tels embrayages multi-disques permettent de limiter la hauteur radiale de limiter l'étendue axiale.

Les embrayages de sortie 20, 30 peuvent être agencés pour ne pas être simultanément dans la même configuration embrayée. En revanche, ils peuvent simultanément être configurés dans leur position débrayée.

Dans l'exemple considéré, le premier embrayage de sortie 20 et le deuxième embrayage de sortie 30 se succèdent radialement en rapprochement de l'axe X Le premier et deuxième embrayage de sortie 20, 30 sont situés radialement à l'intérieurdu rotor 13, c'est-à-dire qu'il existe un plan perpendiculaire à l'axe de rotation X qui coupe les embrayages de sortie 20 et 30 et le rotor.

Dans l'exemple considéré, le dispositif 1 comprend en outre un couvercle 46 faisant partie d'un carter de protection 22. Le couvercle 46 est situé au regard du moteur à combustion interne. Le carter 22 est fixé au moteur à combustion interne par l'intermédiaire de moyens de fixation, par exemple de type vis ou rivet.

Dans l'exemple considéré, les embrayages 10, 20, 30 sont disposés dans une chambre étanche contenant de l'huile, le carter de protection 22 définit en partie cette chambre étanche. Le carter de protection 22 est agencé pour envelopper au moins partiellement l'élément d'entrée de couple 2, l'élément de sortie de couple 3, la machine électrique tournante 12 et les embrayages 10, 20, 30.

Dans l'exemple considéré, le dispositif 1 comprend un organe d'actionnement 40 de l'embrayage de séparation 10. L'organe d'actionnement 40 comprend un corps 41, un piston 42 se déplaçant dans le corps 41 selon un axe Y parallèle à l'axe de rotation X et une butée rotative d'actionnement 43. Cet organe d'actionnement est aussi appelé actionneur de type « CSC» (« Concentric Slave Cylinder» en anglais).

Le piston 42 est annulaire et monté coulissant axialement à l'extérieur d'un tube interne, le piston et le tube formant une chambre d'actionnement. Les pressions fluidiques associées aux positions « embrayée » et « débrayée » sont les pressions de la chambre d'actionnement. Le piston 42 est alimenté en fluide par un actionneur externe de type électro-hydraulique, électro-hydrostatique ou un système de distribution de pression lié à la boite de vitesses (non représenté).

Dans l'exemple considéré, le couvercle 46 définit un réseau d'alimentation en fluide de l'organe d'actionnement 40. Dans la présente invention, l'organe d'actionnement 40 et le couvercle 46 sont deux pièces distinctes. En d'autres termes, l'organe d'actionnement40 est rapporté ou fixé par rivet par exemple sur le couvercle 46 du carter 22. Le corps 41 de l'organe d'actionnement 40 et le couvercle 22 peuvent être réalisés dans des matériaux identiques ou différents. Par exemple, le couvercle 46 est en aluminium tandis que le corps 41 de l'organe d'actionnement 40 est en aluminium, plastique ou acier afin de résister aux efforts du support de rotor et à la fatigue.

L'organe d'actionnement 40 de l'embrayage de séparation 10 est disposé au moins partiellement radialementà l'intérieurde l'embrayage de séparation 10.

Dans le cadre de la présente invention, le dispositif comprend en outre au moins une canalisation de fluide 65 pour le refroidissement et/ou la lubrification de l'embrayage de séparation 10. La canalisation 65 passe successivement à l'intérieur de l'élément d'entrée de couple 2, du support de rotor 5 et du corps 41 de l'organe d'actionnement 40. En d'autres termes, cela signifie que la canalisation 65 est réalisée par l'intermédiaire de différents perçages dans l'élément d'entrée de couple 2, le support de rotor 5 et le corps 41 de l'organe d'actionnement 40.

De préférence, la canalisation 65 comprend une entrée 66 située dans l'élément d'entrée de couple 2 et disposée en regard de l'axe de rotation X du dispositif 1 et une sortie 67 située dans le corps 41 de l'organe d'actionnement 40. La canalisation 65 débouche ainsi en direction de l'embrayage de séparation 10.

Dans l'exemple considéré, le fluide à destination de la canalisation 65 provient des arbres de la boite de vitesse (les arbres n'étant pas visibles sur les figures). En variante, le fluide à destination de la canalisation peut venir de l'élément d'entrée de couple 2 sans passer par les arbres de boite de vitesses.

Dans l'exemple considéré, les perçages composant la canalisation 65 sont orientés radialement.

Dans l'exemple considéré, le support de rotor 5 comporte à son extrémité interne une extension axiale 5a. L'extension 5a est disposé plus près de l'axe de rotation Xque ne l'est l'organe d'actionnement 40 ou le couvercle 46. Ainsi, l'entrée de la canalisation 65 se situe bien plus proche de l'axe X que ne l'est le couvercle 46 et permet donc d'utiliser la centrifugation pour distribuer le fluide contrairement au cas où le fluide arrive par des canalisations situées dans le couvercle 46.

Le corps 41 de l'organe d'actionnement 40, le support de rotor 5 et l'élément d'entrée de couple 2 sont usinés de manière à former au moins une réserve de fluide 68 apte à concentrer le fluide dans la canalisation 65.

Dans l'exemple considéré, le dispositif 1 comprend deux premiers organes de roulement 47. Ces roulements 47 supportent le support de rotor 5, à savoir ici un roulement à billes 47a et un roulement douille à aiguilles 47b. Les organes de roulement 47 sont disposés au contact du support de rotor 5 et du corps 41 de l'organe d'actionnement 40. La canalisation 65 passe dans le corps 41 de l'organe d'actionnement radialement entre les deux premiers organes de roulement 47.

Ces deux roulements 47 permettent en particulier d'absorber les efforts de basculement. De par sa conception, le roulement douilles à aiguilles 47b sera plus à même de reprendre les efforts radiauxdus à la masse et aux vibrations du rotor 13, les aiguilles ayant plus de surface en contact que les billes. On placera de préférence le roulement douilles à aiguilles 47b au plus près du centre de gravité du rotor pour reprendre un maximum d'effort radial. Le roulement à billes 47a absorbera lui une partie secondaire de l'effort radial et tous les efforts axiaux

Dans l'exemple considéré, l'organe de roulement47a comporte une bague intérieure 47i et une bague extérieure 47e. Avantageusement, la bague intérieure 47i est au contact du support de rotor 5, de préférence avec l'extension axiale 5a du support de rotor 5 et la bague extérieure 47e est au contact avec le corps 41 de l'organe d'actionnement 40.

Dans l'exemple considéré, l'organe de roulement à billes 47a est bloqué sur son extrémité axiale avant par deuxcirclips 50, 51 et sur son extrémité axiale arrière par l'épaulement du corps 41 de l'organe d'actionnement 40 et un épaulement de l'extension axiale 5a du support de rotor 5. Le premier et deuxième circlips 50, 51 sont concentriques. Le deuxième circlips 51 est disposé à l'intérieur du premier circlips 50.

Le rotor 13 via son support 5 est alors bloqué dans les deuxdirections axiales, ce qui permet la reprise de tous les efforts axiaux issu du support de rotor 5. Ces efforts peuvent être des efforts actionnement de l'embrayage de séparation 10 dirigés vers la boîte de vitesses, des efforts actionnement du premier ou deuxième embrayage de sortie 20, 30 dirigés vers le moteur thermique ou des efforts de boîte lorsque les arbres de boîtes transmettent du couple (efforts positifs ou négatifs).

Dans l'exemple considéré, le dispositif comprend en outre deux seconds organes de roulement 48 disposés au contact du support de rotor 5, en particulier de son extension axiale 5a et de l'élément d'entrée de couple 2. La canalisation 65 passe dans le support de rotor 5, en particulier dans son extension axiale 5a radialement entre les deux seconds organes de roulement 48.

Dans l'exemple considéré, la canalisation de fluide 65 est agencée de manière à lubrifier et/ou refroidir les premier et/ou second organes de roulement47,48. En effet, la lubrification par le centre permet d'utiliser l'effet centrifuge pour distribuerà la fois le refroidissement et la lubrification vers les pièces environnantes. La lubrification se fait par les fuites du flux principal vers les organes de roulement (les fuites sont identifiées par des flèches partant de la canalisation 65).

La lubrification peut se faire pour un ou plusieurs roulements avec la même huile. Les fuites peuvent être réalisées par des jeux radiaux entre cylindres, des jeux axiaux entres pièces (roulement support et corps 41 de l'organe d'actionnement 40) des perçages axiaux, radiaux dans les pièces et/ou une forme particulière des pièces telles qu'une forme en hélice entrainant le fluide vers sa destination.

Dans l'exemple représenté, le corps 41 de l'organe d'actionnement 40 comprend au moins un perçage d'orientation axiale 44 autorisant le passage du fluide à partie de la canalisation 65 en direction de la butée rotative d'actionnement43. Ainsi, le fluide de lubrification et/ou refroidissement qui s'accumule dans une cavité 15 délimitée par l'organe de roulement 47a et un couvercle 16 faisant office de bouchonp eut être évacuée en direction de la butée rotative d'actionnement 43 par gravité au travers du perçage 44.

Avantageusement, l'embrayage de séparation 10, l'organe d'actionnement 40 associé à l'embrayage d'entrée 10 et au moins un organe de roulement 47 se succèdent radialement en rapprochement de l'axe X

Dans l'exemple considéré, le dispositif 1 comprend également un deuxième et troisième organe d'actionnement 50, 60 avec une butée tournante associée respectivement au premier et deuxième embrayage de sortie 20, 30.

Un organe de maintien en position débrayée, tel qu'un ressort hélicoïdal peut être prévu pour repousser les organes de transmission de force des embrayages de sortie 20, 30. Les embrayages de sortie 20, 30 sont de type « normalement ouvert ».

Ces organes d'actionnement 50, 60 reprennent les mêmes éléments que ceuxdétaillés en lien avec l'organe d'actionnement 40 de l'embrayage de séparation.

Dans l'exemple considéré, les organes d'actionnement 50 et 60 sont logés dans une même enveloppe et ne forment qu'un seul et même composant appelé classiquement système hydraulique de commande ou double actionneur concentrique. Les formes des pistons et/ou des organes d'actionnement 40, 50, 60 sont choisis de sorte qu'ils puissent s'empiler radialement ce qui contribue à la compacité axiale du dispositif 1.

Les organes de transmission de force des embrayages 10, 20, 30 présentent chacun une extrémité radiale extérieure recourbée définissant une surface d'appui pour exercer l'effort axial sur les ensembles multidisques. L'actionnement est ainsi de type « poussé ».

Dans l'exemple considéré, l'extrémité radiale extérieure de trois organes de transmission de force comporte une pluralité de doigts d'extension axiale et reparties autourde l'axe X de sorte que leur surface d'appui est discontinue.

Dans l'exemple considéré, le premier embrayage de sortie 20 et le deuxième embrayage de sortie 30 se succèdent radialement en rapprochement de l'axe X le premier et deuxième embrayage de sortie 20, 30 sont également empilés radialement, c'est-à-dire qu'il existe un axe perpendiculaire à l'axe X qui passe par les deux embrayages.

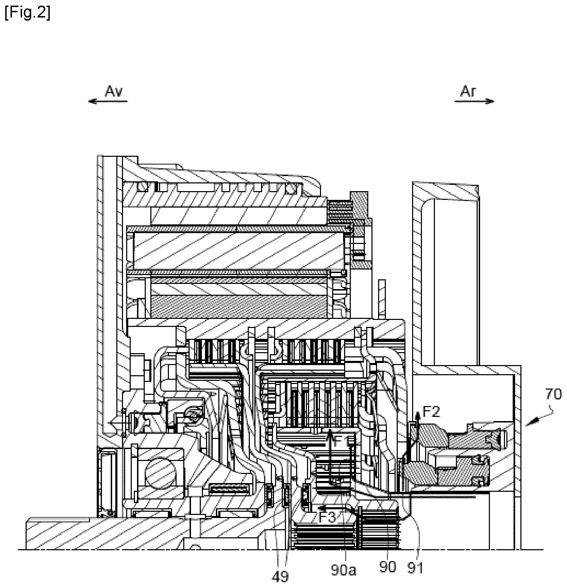

Comme cela est visible sur les figures 1 et 2, le dispositif comprend un circuit d'alimentation en fluide des embrayages de sortie 20, 30 comprenant un premier chemin de circulation de fluide F1. Ce premier chemin de circulation F1 est le chemin principal et est formé par l'intermédiaire du double actionneur concentrique 70, du deuxième élément de sortie de couple 4 et d'un déflecteur 90. Le déflecteur est agencé pour concentrer et orienter le fluide en direction du porte disque interne 31 du deuxième embrayage de sortie 30. Le fluide étant guidé, les pertes sont moins importantes et la lubrification et/ou le refroidissement plus efficaces.

Le déflecteur 90 représenté en figure 1 est solidaire en rotation avec le porte-disque interne 31 du deuxième embrayage de sortie 30. En variante et comme cela est représenté sur la figure 2, le déflecteur 90 peut être fixé sur le double actionneurconcentrique 70.

Le déflecteur 90 comprend une partie d'élongation radiale 90a qui est disposé radialement à l'intérieur du porte disque interne 31 du deuxième embrayage de sortie 30. C'est cette partie d'élongation radiale qui va diriger le fluide vers les embrayages 20, 30 et en particulier vers le centre du deuxième embrayage de sortie 30.

Le dispositif comprend également un deuxième chemin de circulation de fluide F2 en partie associé au premier chemin F1 pour alimenter en fluide des butées tournante 51, 61 du double actionneur concentrique 70. En effet, une partie du fluide principal F1 est récupérée pour lubrifier et/ou refroidir les organes de roulement situés à proximité des embrayages de sortie 20, 30. Le flux F2 peut donc être considéré comme un flux secondaire, également appelé fuite.

Dans l'exemple de la figure 1, c'est-à-dire quand le déflecteur 90 est solidaire en rotation avec le porte disque interne 31 du deuxième embrayage de sortie, il existe un espace 92 entre l'extrémité arrière du déflecteur 90 et l'extrémité avant de l'actionneurconcentrique.

Dans l'exemple de la figure 2, c'est-à-dire quand le déflecteur 90 est fixé sur le double actionneur concentrique 70, il existe un orifice 91 disposé sur l'extrémité arrière du déflecteur 90.

L'orifice 91 ou l'espace 92 sont disposés au-delà du corps du double actionneur concentrique 70 de sorte que ce dernier ne gêne pas la circulation du fluide vers les butées rotatives 51, 61. L'orifice 91 ou l'espace 92 sont disposés radialement à l'intérieur de la butée tournante 61.

Le dispositif comprend également un troisième chemin de circulation de fluide F3 en partie associé au premier pour alimenter en fluide des paliers axiaux 49. Ces paliers axiaux 49 sont configurés pour supporter les efforts axiaux du dispositif 1. Les paliers axiaux 49 sont disposés dans des épaulements de l'élément d'entrée de couple 2 et du premier élément de sortie de couple 3. Un orifice non visible sur le plan de coupe des figures est disposé sur l'élément de sortie de couple 3 afin de permettre le passage de fluide.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Dispositif de transmission de couple (1), notamment pour véhicule automobile, comprenant :
- un élément d'entrée de couple (2) en rotation autourd'un axe X, apte à être couplé en rotation à un vilebrequin d'un moteurthermique,
- un support de rotor (5) apte à supporter radialement un rotor (13) d'une machine électrique tournante (12), le support de rotor (5) étant relié sélectivement à l'élément d'entrée (2) par un embrayage de séparation (10),
- un organe d'actionnement (40) de l'embrayage de séparation (10) comprenant un corps (41), un piston (42) se déplaçant dans le corps (41) selon un axe Y parallèle à l'axe de rotation Xet une butée rotative d'actionnement (43),
- un couvercle (46) faisant partie d'un carter de protection, l'organe d'actionnement (40) et le couvercle (46) étant deux pièces distinctes,
- un premier et un deuxième embrayage de sortie (20, 30) conçus pour coupler en rotation respectivement un premier et deuxième élément de sortie de couple (3, 4) à un premier et deuxième arbre d'entrée d'une boîte de vitesses,
- au moins une canalisation de fluide (65) pour le refroidissement et/ou la lubrification de l'embrayage de séparation (10),
**caractérisé en ce que** ladite canalisation (65) passe successivement à l'intérieur de l'élément d'entrée de couple (2), du support de rotor (5) et du corps (41) de l'organe d'actionnement (40), l'organe d'actionnement (40) étant disposé au moins partiellement radialementà l'intérieur de l'embrayage de séparation (10).

2. Dispositif de transmission de couple (1) selon la revendication 1, **caractérisé en ce que** le support de rotor (5) comporte à son extrémité interne une extension axiale (5a), ladite extension (5a) étant disposé plus près de l'axe de rotation X que ne l'est l'organe d'actionnement (40).

3. Dispositif de transmission de couple (1) selon l'une quelconque des revendications précédentes, **caractérisé en ce que** le corps (41) de l'organe d'actionnement (40) et/ou le support de rotor (5) et/ou l'élément d'entrée de couple (2) sont usinés de manière à former au moins une réserve de fluide (68) apte à concentrer le fluide dans la canalisation (65).

4. Dispositif de transmission de couple (1) selon l'une quelconque des revendications précédentes, **caractérisé en ce qu'**il comprend au moins un premier organe de roulement (47) disposé au contact du support de rotor (5) et du corps (41) de l'organe d'actionnement (40).

5. Dispositif de transmission de couple (1) selon la revendication précédente, **caractérisé en ce que** l'au moins un organe de roulement (47) comporte une bague intérieur (47a) et une bague extérieure (47b), ladite bague intérieure (47a) étant au contact avec le support de rotor (5) et ladite bague extérieure (47b) étant au contact avec le corps (41) de l'organe d'actionnement (40).

6. Dispositif de transmission de couple (1) selon l'une quelconque des revendications précédentes, **caractérisé en ce qu'**il comprend au moins un second organe de roulement (48) disposé au contact du support de rotor (5) et de l'élément d'entrée de couple (2).

7. Dispositif de transmission de couple (1) selon l'une quelconque des revendications 4 à 6, **caractérisé en ce que** la canalisation de fluide (65) est agencée de manière à lubrifier et/ou refroidir les premier et/ou second organes de roulement (47, 48).

8. Dispositif de transmission de couple (1) selon l'une quelconque des revendications précédentes, **caractérisé en ce que** le corps (41) de l'organe d'actionnement (40) comprend au moins un perçage d'orientation axiale (44) autorisant le passage du fluide à partir de la canalisation (65) en direction de la butée rotative d'actionnement (43).

9. Dispositif de transmission de couple (1) selon l'une quelconque des revendications précédentes, **caractérisé en ce qu'**il comprend un deuxième et troisième organe d'actionnement (50, 60) avec une butée tournante associée respectivement au premier et deuxième embrayage de sortie (20, 30).

10. Dispositif de transmission de couple (1) selon l'une quelconque des revendications précédentes, **caractérisé en ce que** le premier embrayage de sortie (20) et le deuxième embrayage de sortie (30) se succèdent radialement en rapprochement de l'axe X

11. Module hybride comprenant un dispositif de transmission de couple (1) selon l'une quelconque des revendications précédentes et une machine électrique tournante (12).
